(19) Europäisches Patentamt
European Patent Office
Office européen des brevets

(11) EP 3 233 487 B1

(12) **EUROPEAN PATENT SPECIFICATION**

(45) Date of publication and mention
of the grant of the patent:
**10.03.2021 Bulletin 2021/10**

(21) Application number: **15834811.0**

(22) Date of filing: **14.12.2015**

(51) Int Cl.:
**B32B 27/08** (2006.01)     **B32B 15/085** (2006.01)
**B32B 27/10** (2006.01)     **B32B 27/32** (2006.01)
**B32B 27/36** (2006.01)

(86) International application number:
**PCT/US2015/065433**

(87) International publication number:
**WO 2016/100151 (23.06.2016 Gazette 2016/25)**

(54) **A MULTILAYER STRUCTURE AND A PACKAGING COMPRISING THE SAME**

MEHRSCHICHTIGE STRUKTUR UND VERPACKUNGEN DAMIT

STRUCTURE MULTICOUCHE ET EMBALLAGE LA COMPORTANT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.12.2014 US 201462092385 P**

(43) Date of publication of application:
**25.10.2017 Bulletin 2017/43**

(73) Proprietors:
• **Dow Global Technologies LLC
Midland, MI 48674 (US)**
• **Rohm and Haas Company
Philadelphia, PA 19106 (US)**

(72) Inventors:
• **CHEN, Mai
Chicago, IL 60601 (US)**
• **WALTHER, Brian W.
Clute, TX 77531 (US)**
• **COOPER, James L.
Brazoria, TX 77422 (US)**

(74) Representative: **Boult Wade Tennant LLP
Salisbury Square House
8 Salisbury Square
London EC4Y 8AP (GB)**

(56) References cited:
EP-A1- 1 118 459          WO-A1-2005/066266
WO-A1-2005/103139          US-A1- 2004 202 806
US-A1- 2005 069 719

## Description

### Field of Invention

The disclosure relates to a multilayer structure and a packaging comprising the same.

### Background of the Invention

Foil lamination is widely used in food and medical package for sterilization, pasteurization and retort applications.

US 2004/202806 A1 relates to grafted isotactic polypropylene obtained by metallocene catalysis. EP118459 A1 relates to gas barrier laminate and a process for producing the same. WO2005/066266 A1 relates to a metallizable alkene or olefin polymer composition. WO2005/103139A1 relates to thermoplastic pipe and liners. US 2005/069719 A1 relates to an encapsulated barrier for flexible films and a method of making and using the same.

These packages require good moisture, product and chemical resistance at high temperatures. Adhesive lamination is preferred over extrusion lamination in certain applications because of its high chemical resistance on foil lamination. In contrast, extrusion lamination is mainly used in paper and low performance packaging, such as chip bags. A way of preparing high performance foil lamination without using adhesive lamination would be desirable in such applications.

### Summary of the Invention

In the first aspect there is provided a multilayer structure as defined in claim 1 of the appended claims and a packaging comprising the same.

Conversion of the units mil and psi to SI units: 1 mil equals $2.54 \times 10^{-5}$ meters, 1 psi equals 6895 N/m$^2$.

### Brief Description of the Drawings

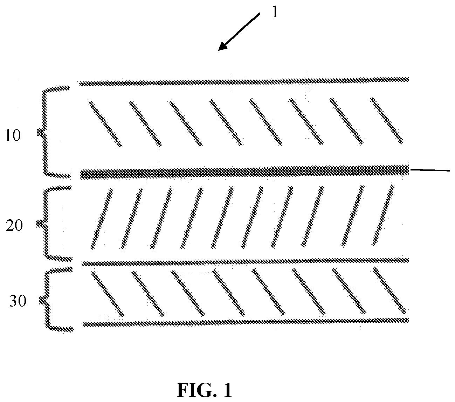

FIG.1 is a schematic illustrating one embodiment of the multilayer structure.

### Detailed Description of the Invention

The disclosure provides a multilayer structure and a packaging comprising the same.

"Maleic anhydride functionalized (MAH functionalized) polyolefin layer" means either (a) a layer which comprises a maleic anhydride functionalized polyolefin resin; or (b) a layer which comprises a blend of a maleic anhydride functionalized polyolefin resin and one or more polyolefin resins.

"Maleic anhydride functionalized polyolefin resin" means a polyolefin resin which is post-polymerization reactor functionalized with maleic anhydride.

"Metal containing layer" means a metal foil layer and/or a metallized polymer layer. Aluminum foil layer is the most commonly used metal foil layer. Metalized polymer layers are polymer films (including, for example, but not limited to polymer films comprising one or more of polyethylene terephthalate (PET), oriented polypropylene (OPP), cast polypropylene (CPP), polyethylene (PE), and polyamides) coated with a thin layer of metal, usually aluminum. Metallization is performed using a physical vapor deposition process. The metal is heated and evaporated under vacuum. This condenses on the cold polymer film, which is unwound near the metal vapor source. Such metal coating is much thinner than a metal foil could be made, in the range of 0.5 micrometers.

"Polymer" means a polymeric compound prepared by polymerizing monomers, whether of the same or a different type. The generic term polymer thus embraces the term homopolymer (employed to refer to polymers prepared from only one type of monomer, with the understanding that trace amounts of impurities can be incorporated into the polymer structure), and the term interpolymer as defined hereinafter. Trace amounts of impurities (for example, catalyst residues) may be incorporated into and/or within the polymer.

"Polyolefin" means a polymer which comprises greater than 50wt% units derived from one or more olefinic monomers, for example ethylene or propylene (based on weight of the polymer) and, optionally, may contain at least one comonomer.

"Polyethylene" means a polymer having greater than 50 wt% units derived from ethylene monomer.

"Polypropylene" means a polymer having greater than 50 wt% units derived from propylene monomer.

"Multilayer structure" means any structure having more than one layer. For example, the multilayer structure may have two, three, four, five or more layers. A multilayer structure may be described as having the layers designated with letters. For example, a three layer structure having a core layer B, and two external layers A and C may be designated as A/B/C.

In a first aspect, the disclosure provides a multilayer structure comprising a maleic anhydride functionalized polyolefin layer applied to a metal containing layer. The maleic anhydride functionalized polyolefin layer comprises a maleic anhydride functionalized polyolefin. The maleic anhydride functionalized polyolefin is a maleic anhydride functionalized polyethylene, such as high density polyethylene. Maleic anhydride functionalized polyethylene copolymers, terpolymers and blends may also be used. Maleic anhydride functionality can be incorporated into the polymer by grafting or other reaction methods. When grafting, the level of maleic anhydride incorporation is typically below 3 percent by weight based on the weight of the polymer. Examples of commercially available maleic anhydride functionalized polyethylene include those available under the tradename AMPLIFY, available from The Dow Chemical Company (Midland, MI, USA), such as AMPLIFY TY1053H, among others. Other examples of maleic anhydride functionalized polyethylene are available under the tradename FUSABOND, available from E.I. du Pont de Nemours and Company (Wilmington, DE, USA) such as FUSABOND E-100, FUSABOND E-158, FUSABOND E265, FUSABOND E528, FUSABOND E-589, FUSABOND M-603, among others; Other maleic anhydride functionalized polyethylene polymers, copolymers, and terpolymers may include POLYBOND available from Chemtura Corporation (Middlebury, CT, USA), such as POLYBOND 3009 and POLYBOND 3029, among others; OREVAC available from Arkema Group (Colobes, France), such as OREVAC 18510P, among others; PLEXAR LyondellBasell Industries (Houston, TX, USA), such as PLEXAR.TM. PX-2049; also grades available under the tradename YPAREX from B.V. DSM Engineering Plastics (Heerlen, the Netherlands), such as YPAREX 8305; and polymers available under the tradename EXXELOR, available from ExxonMobil Chemical Company (Houston, TX, USA), such as EXXELOR PE 1040.

The maleic anhydride functionalized polyolefin layer is applied to a metal containing layer. The application may be accomplished by any acceptable manner, such as extrusion lamination and/or extrusion coating.

Any metal containing layer may form the substrate onto which the maleic anhydride polyolefin layer is applied. Exemplary metal foils include aluminum foil. The foil, when present, may, but need not, be corona treated or subjected to other treatment so as to improve adhesion. Exemplary metalized polymers include metalized polyethylene terephthalate. As generally understood, the metal containing layer may act as a barrier to oxygen or other gas transmission. In an alternative embodiment, the metal containing layer may be replaced by a suitable non-metal containing barrier layer,

According to the invention, the polymer layer is formed from polyethylene which has been post reactor functionalized with maleic anhydride. Post reactor functionalized means that the polyethylene is functionalized with maleic anhydride after the polyethylene is formed in and exits a polymerization reactor. The grafting reaction can occur in a bulk reaction process or alternatively, in the application process, such as during extrusion coating.

The disclosure further provides the multilayer structure according to any embodiment disclosed herein, except that the maleic anhydride functionalized polyolefin layer comprises a polyethylene and the polyethylene has a density equal to or greater than 0.865 g/cc. All individual values and subranges from equal to or greater than 0.865 g/cc are included and disclosed herein; for example the density of the polyethylene can be equal to or greater than 0.865 g/cc, or in the alternative, equal to or greater than 0.885 g/cc, or in the alternative, equal to or greater than 0.90 g/cc, or in the alternative, equal to or greater than 0.925 g/cc, or in the alternative, equal to or greater than 0.935 g/cc. In a particular embodiment, the polyethylene has a density equal o or less than 0.965 g/cc. All individual values and subranges from equal to or less than 0.965 g/cc are included and disclosed herein. For example, the density of the polyethylene can be equal to or less than 0.965 g/cc, or in the alternative, equal to or less than 0.960 g/cc, or in the alternative, equal to or less than 0.955 g/cc, or in the alternative, equal to or less than 0.950 g/cc.

According to the invention, the maleic anhydride functionalized polyolefin layer is formed from a blend of a maleic anhydride functionalized polyolefin and one or more non-functionalized polyolefins.

The one or more polyolefins are selected from the group consisting of polyethylene.

The disclosure further provides the multilayer structure according to any embodiment disclosed herein, except that the multilayer structure further comprises a third polymer layer coextruded with the maleic anhydride functionalized polyolefin layer such that the multilayer structure has an A/B/C structure wherein the maleic anhydride functionalized polyolefin layer is B, the metal containing layer is A and the third polymer layer is C. In a particular embodiment, the third polymer layer may comprise a sealant resin.

The disclosure further provides the multilayer structure according to any embodiment disclosed herein except that the structure is a foil based liquid board structure having any one of the following structures: (i) low density polyethylene (LDPE)/printed paperboard/LDPE/Foil/MAH functionalized resin; (ii) LDPE/printed paperboard/LDPE/Foil/MAH functionalized resin-sealant resin coextruded wherein the sealant resin can be one or more selected from low density polyethylene, linear low density polyethylene, metallocene catalyzed linear low density polyethylene (mLLDPE), and polypropylene; (iii) LDPE/printed paperboard/LDPE-ethylene acrylic acid (EAA) coextruded /Foil/MAH functionalized resin-sealant resin coextruded wherein the sealant resin can be one or more selected from low density polyethylene, linear low density polyethylene, mLLDPE, and polypropylene; and/or (iv) Paper/LDPE/Foil/MAH functionalized resin-nonfunctionalized polyethylene coextruded.

The disclosure further provides the multilayer structure according to any embodiment disclosed herein except that the structure is a film/metalized film or film/foil structure having any one of the following structures: (i) oriented polypropylene (OPP)-metal foil/ MAH functionalized resin- nonfunctionalized polyethylene coextruded; (ii) polyethylene terephthalate (PET)/PET-metal foil/ MAH functionalized resin- nonfunctionalized polyethylene coextruded; and/or (iii) PET/PE/Metal Foil/MAH functionalized PE- nonfunctionalized polyethylene coextruded.

The disclosure further provides the multilayer structure according to any embodiment disclosed herein except that the structure is a retortable structure having any one of the following structures: (i) polypropylene (PP)/printed paperboard/PP/Metal Foil/MAH functionalized PE-PP coextruded; (ii) PET/MAH functionalized PE-nonfunctionalized PE coextruded/Metal Foil/MAH functionalized PE-PP coextruded; (iii) PET/MAH functionalized PE-nonfunctionalized PE coextruded/Metal Foil/MAH functionalized PE-PP coextruded/nylon film/PP; (iv) PET/MAH functionalized PE-non-functionalized PE coextruded/Metal Foil/MAH functionalized PE-PP coextruded/EVOH/PP; and/or (v) PET/PE/Nylon film/MAH functionalized PE-PE coextruded/Metal Foil/MAH functionalized PE-PP coextruded/PP.

The disclosure further provides the multilayer structure according to any embodiment disclosed herein, except that the maleic anhydride functionalized polyolefin comprises from 0.01 to 2 wt% units derived from maleic anhydride. All individual values and subranges from 0.01 to 2 wt% are included and disclosed herein; for example the units derived from maleic anhydride can range from a lower limit of 0.01, 0.1, 1, 1.2, 1.7 or 1.9 wt% to an upper limit of 0.05, 0.25, 1.1, 1.4, 1.8 or 2 wt%. For example, the units derived from maleic anhydride in the maleic anhydride functionalized polyolefin can range from 0.01 to 2 wt%, or in the alternative, from 0.01 to 1.1 wt%, or in the alternative, from 1.1 to 2 wt%, or in the alternative, from 0.5 to 1.7 wt%.

The disclosure further provides the multilayer structure according to any embodiment disclosed herein, except that the metal containing layer comprises a metalized polyethylene terephthalate layer.

The disclosure further provides the multilayer structure according to any embodiment disclosed herein, except that the metal containing layer comprises a metal foil layer.

The disclosure further provides the multilayer structure according to any embodiment disclosed herein, except that the metal containing layer is aluminum foil which has a thickness from 0.20 to 1.0 mil, more preferably from 0.20 to 0.5 mil. All individual values and subranges from 0.20 to 0.5 mil are included and disclosed herein; for example, the aluminum layer thickness can range from a lower limit of 0.20, 0.25, 0.3, 0.35, 0.4 or 0.45 mil to an upper limit of 0.3, 0.35, 0.4, 0.45, or 0.5 mil. For example, the aluminum layer thickness can range from 0.20 to 0.5 mil, or in the alternative, from 0.20 to 0.60 mil, or in the alternative, from 0.6 to 1.0 mil, or in the alternative, from 0.25 to 0.50 mil. To one skilled in the art the thickness of the aluminum is defined as sufficient for the application.

Fig. 1 provides a schematic generally illustrating the structure of the inventive multilayer structure 1. The multilayer structure 1 includes a metal containing layer 10 (layer A), such as a metallized polyethylene terephthalate (PET), wherein 40 indicates the deposited metal layer onto the PET. The multilayer structure further includes a polymer layer which comprises a maleic anhydride functionalized polyolefin 20 (layer B). In a particular embodiment, as illustrated in Fig. 1, the inventive multilayer structure 1 further includes a third polymer layer 30 (layer C) which may be coextruded with layer B.

The disclosure further provides that the metal surface may be treated prior to use by any of a variety of methodologies including corona treatment, flame treatment, or chemical treatment. The treatment is accomplished before the next layer is applied to the aluminum.

The disclosure further provides the multilayer structure according to any embodiment disclosed herein, except that the multilayer structure exhibits no more than a 50% drop in adhesion as measured by the boil in bag test using any of the ingredients described below in the test method description. All individual values and subranges from no more than a 50% drop in adhesion are included and disclosed herein. For example, the drop in adhesion may be no more than 50%, or in the alternative, no more than 40%, or in the alternative, no more than 30%, or in the alternative, no more than 20%.

The disclosure further provides a packaging comprising the multilayer structure of any embodiment disclosed herein. In a particular embodiment, the packaging is a retort and/or sterilization packaging. The packaging may be used to contain, in various embodiments, solids, slurries, liquids, or gasses. By way of example and not limitation, the packaging may be used to contain acidic solutions, corn oil, alcohols, meats, cheeses, sun screen, shampoo, spice, soy sauce, creamer, flavored coffee, milk, juice, detergent, aseptic food, hot fill juice, fatty food, baby wipe, iodine solution, salad dressing, sauces, ovenable lidding, cup stock, sachet, and/or retort food.

## Examples

The following examples illustrate the present invention but are not intended to limit the scope of the invention.

All of the examples herein were made using a PET backed metal foil layer (metal containing layer) which was prepared by bonding 1 mil PET film to one side of 0.35 mil aluminum foil using a urethane laminating adhesive. All of the examples herein were prepared extrusion or co-extrusion coating the polymer layer onto the foil side of PET-backed metal foil layer utilizing a Black Clawson extrusion coating coextrusion-capable laboratory line equipped with a 0.9 meter wide die. The samples were taped onto one edge and dropped onto a moving substrate which was an 80 g/m$^2$ brown

(unbleached) kraft paper which was moving through the line at 90 meters/min. The samples were coated with the coextruded molten polymers at 300°C.

Three comparative multilayer structures (Comparative Examples 1-3) were made using non-maleic anhydride functionalized polymer layers, as shown in Table 1. Inventive Example 1 was produced using coextruded layers of maleic anhydride functionalized polyethylene/nonfunctionalized polyethylene blend with a nonfunctionalized polyethylene, as shown in Table 1. In each case the Layer A is the aluminum coated PET and the remaining layers are noted in Table 1. Table 1 further shows the adhesion of the polymer layer to the metal containing layer before and after the boil-in-bag test. As seen in Table 1, only Inventive Example 1 maintained good adhesion after "1:1:1" boiling test.

**Table 1**

| | Polymer Layer (coextruded layers) | Adhesion between foil and Layer B (g/25mm) | Adhesion after "boil-in-bag" test (g/25mm) |
|---|---|---|---|
| Comparative Example 1 | Layer B: 50 g/m$^2$ DOWLEX 3010 | 411 | <10 |
| Comparative Example 2 | Layer B: 16 g/m$^2$ PRIMACOR 3440/ Layer C: 50 g/m$^2$ DOWLEX 3010 | 568 | 91 |
| Comparative Example 3 | Layer B: 16 g/m$^2$ AMPLIFY IO 3701/ Layer C: 50 g/m$^2$ DOWLEX 3010 | 412 | 84 |
| Inventive Example 1 | Layer B: 16 g/m$^2$ polyethylene functionalized with 0.27wt% maleic anhydride, having an $I_2$ of 2.0 g/10min and a density of 0.958 g/cc / Layer C: 50 g/m$^2$ DOWLEX 3010 | 651 | 618 |

DOWLEX 3010 is a polyethylene having an $I_2$ of 5.4 g/l0min and a density of 9.21 g/cc, which is commercially available from The Dow Chemical Company (Midland, MI, USA). PRIMACOR 3440 is an ethylene/acrylic acid copolymer having an $I_2$ of 10 g/l0min and a density of 0.938 g/cc, which is commercially available from The Dow Chemical Company. AMPLIFY IO 3701 is a zinc ionomer of an ethylene/acrylic acid copolymer having an $I_2$ of 5.2 g/l0min, which is commercially available from The Dow Chemical Company.

Two additional comparative multilayer examples (Comparative Examples 4-5) were produced having the structure shown in Table 2. Inventive Examples 2-6 were produced using a maleic anhydride functionalized polyethylene with varying levels of maleic anhydride. Table 2 further provides the adhesion before and after the boil in bag test.

**Table 2**

| | Polymer Layer (coextruded layers) | Adhesion between foil and Layer B (g/25 mm) | Adhesion after "boil-in-bag" test (g/25 mm) |
|---|---|---|---|
| Comparative Example 4 | Layer B: 16 g/m$^2$ LDPE 722 Layer C: 50 g/m$^2$ DOWLEX 3010 | 291 | 18 |
| Comparative Example 5 | Layer B: 16 g/m$^2$ PRIMACOR 3440 Layer C: 50 g/m$^2$ DOWLEX 3010 | 470 | 107 |
| Inventive Example 2 | Layer B: 16 g/m$^2$ (polyethylene functionalized with 0.014 wt% maleic anhydride) Layer C: 50 g/m$^2$ DOWLEX 3010 | 412 | 84 |
| Inventive Example 3 | Layer B: 16 g/m$^2$ (polyethylene functionalized with 0.068 wt% maleic anhydride) Layer C: 50 g/m$^2$ DOWLEX 3010 | 357 | 538 |

(continued)

| | Polymer Layer (coextruded layers) | Adhesion between foil and Layer B (g/25 mm) | Adhesion after "boil-in-bag" test (g/ 25 mm) |
|---|---|---|---|
| Inventive Example 4 | Layer B: 16 g/m$^2$ (polyethylene functionalized with 0.135wt% maleic anhydride)<br>Layer C: 50 g/m$^2$ DOWLEX 3010 | 405 | 586 |
| Inventive Example 5 | Layer B: 16 g/m$^2$ (polyethylene functionalized with 0.27wt% maleic anhydride)<br>Layer C: 50 g/m$^2$ DOWLEX 3010 | 496 | 759 |
| Inventive Example 6 | Layer B: 16 g/m$^2$ polyethylene functionalized with 0.19wt% maleic anhydride<br>Layer C: 50 g/m$^2$ DOWLEX 3010 | 328 | 693 |

LDPE 722 is a nonfunctionalized polyethylene having an $I_2$ of 8 g/10min and a density of 0.920 g/cc, which is commercially available from The Dow Chemical Company. The maleic anhydride functionalized polyethylene resins in Inventive Examples 2-6 have an $I_2$ of 6.0 g/lOmin and a density of 0.925 g/cc. As can be seen in Table 2, only the Inventive Examples, even at very low maleic anhydride graft content, show good adhesion following the boil in bag test.

While not being bound to the theory, the relative chemical resistance of the maleic anhydride grafted polymer, Layer B, may serve as a chemical boundary to the diminishing effects of the contents in the test structure. Surprisingly there is an increase in the adhesion force after the boil-in-bag test for the Inventive Examples where the level of maleic anhydride grafted polymer in the metal contacting layer was greater than 1wt%.

To one skilled in the art it is recognized that the layers described in Tables 1 and 2 are subsets of a multilayer structure where there may be additional layers in the overall structure such as a print layer, seal layer, paper, and the like.

## Test Methods

Test methods include the following:
Polymer density is measured according to ASTM D792.

$I_2$ is measured according to ASTM D1238 (190°C/2.16 kg).

The Boil-in-bag test is conducted according to the following steps.

Step 1. Cut out rectangles of laminate of suitable size to make finished pouches with an interior size of about 10 cm x 15 cm.

Step 2. Heat seal the bottom and sides of the rectangle pieces @ 200 °C and 50 psi.

Step 3: Fill the pouches with 100 grams of a mixture of Meijer distilled white vinegar /Mazola corn oil/ Heinz tomato ketchup (1:1:1 ratio by weight). Seal the top of pouch after filling.

Step 4: Place the pouches in boiling water and leave for 1 hour.

Step 5: Take pouches out of water. Cut open the pouch and empty the content. Cut one inch strip and measure the laminate bond strength on a tensile tester. This step is completed within ten minutes after Step 4.

Adhesion between the foil layer (Layer A) and the MAH functionalized PE layer (Layer B) (before and after the boil-in-bag test) was measured according to ASTM D1876 using a Thwing-Albert Tensile Tester at a test speed of 10 in/min.

Fourier Transform Infrared Spectroscopy (FTIR) Analysis--Maleic Anhydride Content.

The concentration of maleic anhydride is determined by the ratio of peak heights of the maleic anhydride, at wave number 1791 cm.sup.-1, to the polymer reference peak, which, in case of polyethylene, is at wave number 2019 cm.sup.-1. Maleic anhydride content is calculated by multiplying this ratio with the appropriate calibration constant. The equation used for maleic grafted polyolefins (with reference peak for polyethylene) has the following form, as shown in Equation 1A.

$$MAH \ (wt. \ \%) = A * \{[FTIR \ PeakArea@1791 \ cm-1]/ \\ [FTIR \ PeakArea \ 2019 \ cm-1/+B*[FTIR \\ PeakArea@1712 \ cm-1]/[FTIR \ PeakArea@2019 \\ cm-1]\} \qquad (Eqn. \ 1A)$$

The calibration constant A can be determined using C13 NMR standards. The actual calibration constant may differ slightly depending on the instrument and polymer. The signal at wave number 1712 cm$^{-1}$ accounts for the presence of maleic acid, which is negligible for freshly grafted material. Over time however, maleic anhydride is readily converted to maleic acid in the presence of moisture. Depending on surface area, significant hydrolysis can occur in just a few days under ambient conditions. The acid has a distinct peak at wave number 1712 cm$^{-1}$. The constant B in Equation 1A is a correction for the difference in extinction coefficients between the anhydride and acid groups.

The sample preparation procedure begins by making a pressing, typically 0.05 to 0.15 millimeters in thickness, in a heated press, between two protective films, at 150-180 °C for one hour. MYLAR and TEFLON are suitable protective films to protect the sample from the platens. Aluminum foil must never be used (maleic anhydride reacts with aluminum). Platens should be under pressure (.about. 10 ton) for about five minutes. The sample is allowed to cool to room temperature, placed in an appropriate sample holder, and then scanned in the FTIR. A background scan should be run before each sample scan, or as needed. The precision of the test is good, with an inherent variability of less than $\pm 5\%$. Samples should be stored with desiccant to prevent excessive hydrolysis. Maleic anhydride and acid are represented by peaks at about 1791 and 1712 cm$^{-1}$, respectively.

## Claims

1. A multilayer structure comprising:

   a polymer layer which consists of a maleic anhydride functionalized polyolefin applied to a metal containing layer;
   wherein the maleic anhydride functionalized polyolefin layer is formed from a blend of a maleic anhydride functionalized polyolefin and one or more *non-functionalised* polyolefins;
   wherein the one or more polyolefins are selected from the group consisting of polyethylene;
   wherein the total maleic anhydride functionalized polyolefin comprises from 0.01 to 2 wt% units derived from maleic anhydride;
   and wherein the polymer layer is formed from a polyethylene which has been post reactor functionalized with maleic anhydride.

2. The multilayer structure of claim 1 wherein the maleic anhydride functionalized polyolefin is extrusion laminated and/or extrusion coated onto the metal containing layer.

3. The multilayer structure of claim 1 wherein the polyethylene-based polymer is a high density polyethylene having a density equal to or greater than 0.865 g/cc, measured according to ASTM D792.

4. The multilayer structure of claim 1 wherein the polyethylene-based polymer is a high density polyethylene having a density equal to or greater than 0.90 g/cc, measured according to ASTM D792.

5. The multilayer structure of claim 1 wherein the polyethylene-based polymer is a high density polyethylene having a density equal to or greater than 0.935 g/cc, measured according to ASTM D792.

6. The multilayer structure of claim 1 wherein the polyethylene-based polymer is a high density polyethylene having a density equal to or greater than 0.950 g/cc, measured according to ASTM D792.

7. The multilayer structure of claim 1 wherein the maleic anhydride functionalized polyolefin layer is formed from a blend of a maleic anhydride functionalized polyolefin and one or more polyolefins where the maleic anhydride blend component is greater than 1wt% in the layer.

8. The multilayer structure of claim 1 further comprising a third layer coextruded with the maleic anhydride functionalized polyolefin layer such that the multilayer structure has an A/B/C structure wherein the polymer layer is B, the metal containing layer is A and the third layer is C.

9. The multilayer structure of claim 1 wherein the metal containing layer comprises a metalized polyethylene terephthalate layer.

10. The multilayer structure of claim 1 wherein the metal containing layer comprises a metal foil layer.

11. The multilayer structure of claim 10 wherein the metal containing layer is from 5 to 25 $\mu$m (0.20 to 1.0 mil) thick.

12. A packaging comprising the multilayer structure of claim 1.

13. The packaging of claim 12 wherein the packaging is a retort and/or sterilization packaging

**Patentansprüche**

1. Eine Mehrschichtenstruktur, die Folgendes beinhaltet:

eine Polymerschicht, die aus einem mit Maleinsäureanhydrid funktionalisierten Polyolefin, das auf eine metallhaltige Schicht aufgebracht ist, besteht;
wobei die Schicht aus mit Maleinsäureanhydrid funktionalisiertem Polyolefin aus einem Gemisch eines mit Maleinsäureanhydrid funktionalisierten Polyolefins und eines oder mehrerer *nicht funktionalisierter* Polyolefine gebildet ist;
wobei das eine oder die mehreren Polyolefine aus der Gruppe ausgewählt sind, die aus Polyethylen besteht;
wobei das gesamte mit Maleinsäureanhydrid funktionalisierte Polyolefin zu 0,01 bis 2 Gew.-% von Maleinsäureanhydrid abgeleitete Einheiten beinhaltet;
und wobei die Polymerschicht aus einem Polyethylen gebildet ist, das nach dem Reaktor mit Maleinsäureanhydrid funktionalisiert wurde.

2. Mehrschichtenstruktur gemäß Anspruch 1, wobei das mit Maleinsäureanhydrid funktionalisierte Polyolefin auf die metallhaltige Schicht extrusionskaschiert und/oder extrusionsbeschichtet wird.

3. Mehrschichtenstruktur gemäß Anspruch 1, wobei das polyethylenbasierte Polymer ein Polyethylen hoher Dichte ist, das eine Dichte von gleich oder mehr als 0,865 g/cm$^3$, gemessen nach ASTM D792, aufweist.

4. Mehrschichtenstruktur gemäß Anspruch 1, wobei das polyethylenbasierte Polymer ein Polyethylen hoher Dichte ist, das eine Dichte von gleich oder mehr als 0,90 g/cm$^3$, gemessen nach ASTM D792, aufweist.

5. Mehrschichtenstruktur gemäß Anspruch 1, wobei das polyethylenbasierte Polymer ein Polyethylen hoher Dichte ist, das eine Dichte von gleich oder mehr als 0,935 g/cm$^3$, gemessen nach ASTM D792, aufweist.

6. Mehrschichtenstruktur gemäß Anspruch 1, wobei das polyethylenbasierte Polymer ein Polyethylen hoher Dichte ist, das eine Dichte von gleich oder mehr als 0,950 g/cm$^3$, gemessen nach ASTM D792, aufweist.

7. Mehrschichtenstruktur gemäß Anspruch 1, wobei die Schicht aus mit Maleinsäureanhydrid funktionalisiertem Polyolefin aus einem Gemisch eines mit Maleinsäureanhydrid funktionalisierten Polyolefins und eines oder mehrerer Polyolefine gebildet ist, wobei die Maleinsäureanhydrid-Gemischkomponente in der Schicht mehr als 1 Gew.-% beträgt.

8. Mehrschichtenstruktur gemäß Anspruch 1, die ferner eine mit der Schicht aus mit Maleinsäureanhydrid funktionalisiertem Polyolefin coextrudierte dritte Schicht beinhaltet, sodass die Mehrschichtenstruktur eine A/B/C-Struktur aufweist, wobei die Polymerschicht B ist, die metallhaltige Schicht A ist und die dritte Schicht C ist.

9. Mehrschichtenstruktur gemäß Anspruch 1, wobei die metallhaltige Schicht eine metallisierte Polyethylenterephthalatschicht beinhaltet.

10. Mehrschichtenstruktur gemäß Anspruch 1, wobei die metallhaltige Schicht eine Metallfolienschicht beinhaltet.

**11.** Mehrschichtenstruktur gemäß Anspruch 10, wobei die metallhaltige Schicht 5 bis 25 μm (0,20 bis 1,0 mil) dick ist.

**12.** Eine Verpackung, die die Mehrschichtenstruktur gemäß Anspruch 1 beinhaltet.

**13.** Verpackung gemäß Anspruch 12, wobei die Verpackung eine Koch- und/oder Sterilisierungsverpackung ist.


**Revendications**

**1.** Une structure multicouche comprenant :

une couche de polymère qui consiste en une polyoléfine fonctionnalisée d'anhydride maléique appliquée sur une couche contenant du métal ;
dans laquelle la couche de polyoléfine fonctionnalisée d'anhydride maléique est formée à partir d'un mélange homogène d'une polyoléfine fonctionnalisée d'anhydride maléique et d'une ou de plusieurs polyoléfines *non fonctionnalisées* ;
dans laquelle les une ou plusieurs polyoléfines sont sélectionnées dans le groupe constitué de polyéthylène ;
dans laquelle la polyoléfine fonctionnalisée d'anhydride maléique totale comprend de 0,01 à 2 % en poids d'unités dérivées d'anhydride maléique ;
et dans laquelle la couche de polymère est formée à partir d'un polyéthylène qui a été fonctionnalisé post-réacteur par de l'anhydride maléique.

**2.** La structure multicouche de la revendication 1 dans laquelle la polyoléfine fonctionnalisée d'anhydride maléique est stratifiée par extrusion et/ou revêtue par extrusion sur la couche contenant du métal.

**3.** La structure multicouche de la revendication 1 dans laquelle le polymère à base de polyéthylène est un polyéthylène haute densité ayant une masse volumique supérieure ou égale à 0,865 g/cm$^3$, mesurée selon l'ASTM D792.

**4.** La structure multicouche de la revendication 1 dans laquelle le polymère à base de polyéthylène est un polyéthylène haute densité ayant une masse volumique supérieure ou égale à 0,90 g/cm$^3$, mesurée selon l'ASTM D792.

**5.** La structure multicouche de la revendication 1 dans laquelle le polymère à base de polyéthylène est un polyéthylène haute densité ayant une masse volumique supérieure ou égale à 0,935 g/cm$^3$, mesurée selon l'ASTM D792.

**6.** La structure multicouche de la revendication 1 dans laquelle le polymère à base de polyéthylène est un polyéthylène haute densité ayant une masse volumique supérieure ou égale à 0,950 g/cm$^3$, mesurée selon l'ASTM D792.

**7.** La structure multicouche de la revendication 1 dans laquelle la couche de polyoléfine fonctionnalisée d'anhydride maléique est formée à partir d'un mélange homogène d'une polyoléfine fonctionnalisée d'anhydride maléique et d'une ou de plusieurs polyoléfines où le constituant de mélange homogène anhydride maléique est supérieur à 1 % en poids dans la couche.

**8.** La structure multicouche de la revendication 1 comprenant en outre une troisième couche coextrudée avec la couche de polyoléfine fonctionnalisée d'anhydride maléique de telle sorte que la structure multicouche a une structure A/B/C dans laquelle la couche de polymère est B, la couche contenant du métal est A et la troisième couche est C.

**9.** La structure multicouche de la revendication 1 dans laquelle la couche contenant du métal comprend une couche de polyéthylène téréphtalate métallisée.

**10.** La structure multicouche de la revendication 1 dans laquelle la couche contenant du métal comprend une couche de feuille de métal.

**11.** La structure multicouche de la revendication 10 dans laquelle la couche contenant du métal a une épaisseur allant de 5 à 25 μm (0,20 à 1,0 mil).

**12.** Un emballage comprenant la structure multicouche de la revendication 1.

**13.** L'emballage de la revendication 12, l'emballage étant un emballage autoclave et/ou de stérilisation.

**FIG. 1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2004202806 A1
- EP 118459 A1
- WO 2005066266 A1
- WO 2005103139 A1
- US 2005069719 A1